# EUROPEAN PATENT SPECIFICATION

(11) **EP 2 523 487 B1**
(45) Date of publication and mention of the grant of the patent: **06.09.2017**
(21) Application number: 11728528.8
(22) Date of filing: 04.01.2011
(51) Int. Cl.: H04L 29/06, H04W 76/02, H04W 12/10, H04W 84/04

(54) **METHOD, APPARATUS AND SYSTEM FOR REALIZING INTEGRITY PROTECTION**
VERFAHREN, VORRICHTUNG UND SYSTEM ZUR HERSTELLUNG EINES INTEGRITÄTSSCHUTZES
PROCÉDÉ, APPAREIL ET SYSTÈME DE RÉALISATION DE PROTECTION D'INTÉGRITÉ

(30) Priority: 04.01.2010 CN 201010033652
(43) Date of publication of application: 14.11.2012
(73) Proprietor: China Academy of Telecommunications Technology, Haidian District Beijing 100191 (CN)
(72) Inventor: YANG, Yi, Beijing 100083 (CN); WANG, Ying, Beijing 100083 (CN)
(74) Representative: Cabinet Chaillot
(86) International application number: PCT/CN2011/070013
(87) International publication number: WO 2011/079828

(56) References cited:
- WO-A1-2006/088400
- CN-A- 101 166 073
- CN-A- 101 202 936
- TW-A- 200 808 080
- US-A1- 2009 074 189
- HUAWEI ET AL: "Relay S1-MME termination consideration", 3GPP DRAFT; R3-092188, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050391738, [retrieved on 2009-10-02]
- NTT DOCOMO ET AL: "Text proposal to TR 36.806 on Relay Security over the Un interface", 3GPP DRAFT; R3-093305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Dublin; 20091116, 9 November 2009 (2009-11-09), XP050398394, [retrieved on 2009-11-17]
- "LTE; Evolved Universal Terrestrial Radio Access (E-UTRA) ; S1 Application Protocol (S1AP) (3GPP TS 36.413 version 8.5.1 Release 8)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ts_136413v080501p.pdf, no. V8.5.1, 1 April 2009 (2009-04-01), XP014044239,

## Description

The present application claims the priority of the Chinese patent application with the application date of January 4, 2010, the application number of 201010033652.7, and the patent name of "method, apparatus and system for realizing integrity protection".

### FIELD OF THE PRESENT INVENTION

The present invention relates generally to the field of mobile communication technology, and more particularly to method, apparatus and system for realizing integrity protection.

### BACKGROUND OF THE PRESENT INVENTION

In future mobile communication system, such as B3G (Beyond Third Generation) or LTE-A (Long Term Evolution-Advanced) system, the system would provide higher peak data rate and cell throughput, and need more larger bandwidth. At present, few un-used frequency band below 2GHz is left, B3G system can only seek a part of or all of requisite bandwidth at higher frequency band, for example the frequency band above 3GHz. Radio waves have faster attenuation and shorter transmission distance on higher band. Accordingly, more base stations would be needed for consecutive coverage at same coverage region. More base stations would increase network deployment cost because usually base station has expensive price. To solve the problem of network deployment cost, many vendors and standardization organizations begin to introduce RN (Relay Node) into cellular communication system.

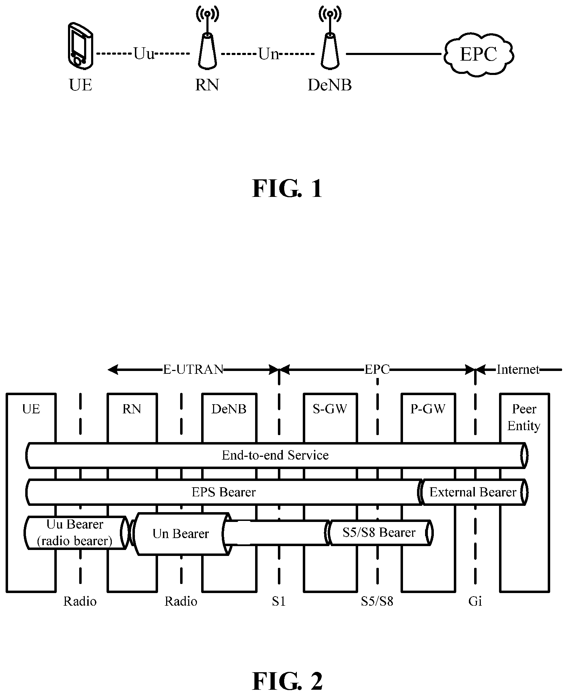

Figure 1 is overall LTE-A network architecture with deployed RN. Therein, RN is wirelessly connected to DeNB (Donor Evolved Node B), and access the core network via donor cell. RN doesn't have direct wired interface with core network, and each RN can manage one or more cells. The interface between UE (User Equipment) and RN is called Uu interface, the interface between DeNB and RN is called Un interface.

At the above-mentioned network architecture, RN has double identities, viz. UE identity and eNB (evolved Node B) identity. First, RN has UE identity when startup. The RN's startup procedure is similar to legacy UE attachment procedure. RN has its own S-GW/P-GW (Serving Gateway/PDN Gateway) and control plane node MME (Mobility Management Entity). All data packets destined to RN would pass the S-GW/P-GW of RN, the S-GW/P-GW of RN would send the data packet to the serving DeNB of RN. DeNB sends the data packet to RN on Un interface. Then, RN has eNB identity for UE. Downlink data of UE is sent form S-GW/P-GW of UE to the serving RN of UE, and then RN sends downlink data to UE on Uu interface.

At the present, four alternative architectures are put forward in 3GPP (3rd Generation Partnership Project), and the present invention has relation with candidate architecture 1, 2, and 3. Therein, startup procedure of candidate architecture 1 RN comprises: RN uses the legacy UE attachment procedure to register in MME. MME obtains subscription data of RN from HSS (Home Subscriber Server) and then establishes EPS (Evolved Packet System) default bearer for RN in S-GW/P-GW. Subsequently, MME of RN sends Initial Context Setup Request to the DeNB of RN, triggering establishment RN radio bearer between DeNB and RN. O&M (Operation and Maintenance) system authenticates RN after the EPS bearer of RN has been established. If RN passes authentication, the O&M downloads configuration data into RN. RN can start normal operation after establishing necessary S1 interface and X2 interface.

RN startup procedure of candidate architecture 2 comprises: RN uses the legacy UE attachment procedure to register in MME, MME obtains subscription data of RN from HSS and establishes RN EPS default bearer in DeNB. Subsequently, MME of RN sends Initial Context Setup Request to the DeNB of RN, triggering establishment RN radio bearer between DeNB and RN. O&M (Operation and Maintenance) system authenticates RN after EPS bearer of RN has been established. If RN passes authentication, the O&M downloads configuration data into RN. RN establishes one S1 interface and one X2 interface with DeNB, and then DeNB updates existing S1 connection and X2 connection. RN can start normal operation.

The difference between candidate architecture 3 and candidate architecture 1 is that function of S-GW/P-GW is integrated in DeNB. other procedures are the same as in candidate architecture 1.

Data transmission process and bearer mapping relation of candidate architecture 1 and candidate architecture 3 comprising: at downlink direction, P-GW/S-GW of UE encapsulates IP data packet of UE into GTP (GPRS Tunnelling Protocol) tunnel destined to RN, and sends it to P-GW/S-GW of RN. P-GW/S-GW of RN maps the received IP data packet into RN EPS bearer and sends it to DeNB after encapsulating it in GTP tunnel. IP data packets which have the same QoS (Quality of Service) can be mapped into the same RN EPS bearer. DeNB maps received RN GTP tunnel to RN radio bearer of Un interface and sends to RN. Finally, RN maps received IP data packet to UE DRB (Data Radio Bearer) of Uu interface according to UE GTP tunnel of interior layer and sends to UE. At uplink direction, RN maps received data packet to EPS bearer of RN.

Data transmission process and bearer mapping relation of candidate architecture 2 comprising: in downlink direction, IP data packet which is sent to UE is mapped into GTP tunnel of UE spanned from P-GW/S-GW of UE to DeNB. DeNB maps UE GTP tunnel to RN DRB in Un interface one by one according to QCI. UE EPS bearers which have same QCI could be mapped into the same RN DRB. RN maps UE GTP tunnel to UE DRB in Uu interface and sends received packet to UE. In uplink direction, bearer mapping function of RN is similar to DeNB.

QoS mechanism is an important feature in EPS, which can provide guarantee about transmission efficiency and reliability for different service, and maintain good experience. QoS control of EPS is based on bearer. An End-to-end service comprises EPS bearer and external bearer, therein, EPS bearer belongs to EPS scope, and external bearer relies on the system outside EPS. EPS bear architecture of candidate architecture 1, 2, 3, is depicted in figure 2, therein, EPS bearer between UE and P-GW is divided into E-RAB (E-UTRAN Radio Access Bearer) between UE and S-GW and S5/S8 bearer between S-GW and P-GW. E-RAB could also be divided into Uu bearer between UE and RN and S1 bearer between RN and S-GW. Uu bearer between UE and RN is a radio bearer, and S1 bearer and RN DRB are one-to-one mapping relationship. When RN is introduced, EPS bearer also includes RN EPS. RN EPS bearer usually has established before UE EPS bearer is setup. When RN is startup, Un bearer is setup between RN and DeNB. Un bearer is a radio bearer, which comprises RN SRB (for signalling) and RN DRB (for user data).

All data packet between UE and P-GW should be mapped to corresponding UE EPS bearer for transmission. Each network node schedules and transmits data packet according to QoS parameter of bearer allocated for the data packet. For LTE system, E-RAB ID is equal to EPS Bearer ID.

QoS parameters of EPS bearer level comprise: ARP (Allocation and Retention Priority characteristics), QCI (QoS Class Identifier), GBR (Guaranteed Bit Rate) and MBR (Maximum Bit Rate). Each node in E-UTRAN determines how to group data based on above-mentioned QoS parameter to satisfy QoS. Therein, APP is used to determine whether establishment and update of a bearer is accepted or rejected when resource is limited; APP can also be used for determining whether release an existing bearer is allowed or not when resource is limited accidentally (such as handover) at radio access network. QCI is a parameter related to radio access network, which is used for controlling transmission policy of data packet, such as scheduling, admission, queuing management and link layer protocol configuration. GBR indicates the transmission rate allocated for a GBR bearer, MBR is the upper limitation of transmission rate allocated for a GBR. In current specification, MBR should be equal to GBR.

In process to achieve the present invention, the inventor finds that at least the following problems exist in current technology:
S1-AP (S1 Interface Application Protocol) messages sent to UE from MME are transmitted on RN DRB in Un interface. In current LTE security mechanism, radio interface doesn't provide integrity protection for user data. Subsequently, if S1-AP messages are protected in PDCP (Packet Data Convergence Protocol) layer, they are not integrity protected or protected by enhanced security demand, i.e. activate integrity protection for DRB on Un interface. However, it would reduce available bandwidth in radio interface and decrease user experiences for real-time service if integrity protection is activated for all data bearer on radio interface. If NDS/IP (Network Domain Security for IP based protocol) mechanism is used to provide integrity protection for S1-AP messages and X2-AP (X2 Interface Application Protocol) messages on Un, it would lead to serious efficiency degrade in resource-limited radio interface, because IPsec mechanism bring extra IP header cost.
US patent No. 2009/074189 A1 discloses a method of providing security of a relay station, by which the security can be provided for the relay station in a broadband wireless access system having the relay station using authentication key, in order to complete management information exchange between the relay station and a base station.
Document HUAWEI ET AL : "Relay S1-MME termination consideration", 3GPP DRAFT ; R3-092188, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki ; 20091012, 12 October 2009 (2009-10-12), discloses QoS effect and security effect of relay S 1-MME termination in LTE cellular network.

### SUMMARY OF THE PRESENT INVENTION

The embodiment of the present invention provides a method, apparatus and system for realizing integrity protection, using for providing integrity protection for data which needs integrity protection, particularly for S1-AP messages and X2-AP messages in a manner which does not increase the system load.

The embodiment of the present invention provides a method for realizing integrity protection, comprising the following steps:
relay node RN receiving the message which carrying integrity protection information from base station;
said RN providing integrity protection for being transmitted data according to said integrity protection information.

The embodiment of the present invention provides a method for realizing integrity protection, comprising the following steps:
said base station sending message which carrying integrity protection information to RN;
said base station providing integrity protection for being transmitted data according to said integrity protection information.

The embodiment of the present invention provides a RN, comprising:
receiving module, is used for receiving the message which carrying integrity protection information from base station;
executing module, is used for executing integrity protection for being transmitted data according to said integrity protection information.

The embodiment of the present invention provides a base station, comprising:
sending module, is used for sending message which carrying integrity protection information to RN;
executing module, is used for executing integrity protection for being transmitted data according to the integrity protection information which sent by said sending module.

The embodiment of the present invention provides a system for realizing integrity protection, comprising:
base station, is used for sending message which carrying integrity protection information to RN, and executing integrity protection for being transmitted data according to said integrity protection information;
RN, is used for receiving the message which carrying integrity protection information from base station, executing integrity protection for being transmitted data according to said integrity protection information.

The technical proposal of the embodiments of the present invention has the following advantage: Providing integrity protection for data which needs integrity on Un interface by activating integrity protection per bearer, particularly the bearer which transmitting S1-AP messages and X2-AP messages.

### BRIEF DESCRIPTION OF THE DRAWINGS

Figure 1 is LTE-A system architecture diagram with deployed RN.
Figure 2 is EPS bearer service architecture diagram.
Figure 3 is a flow diagram of the method for realizing integrity protection in embodiment 1 of the present invention.
Figure 4 is a flow diagram of the method for realizing integrity protection in embodiment 2 of the present invention.
Figure 5 is a flow diagram of the method for realizing integrity protection in embodiment 3 of the present invention.
Figure 6 is a flow diagram of the method for realizing integrity protection in embodiment 4 of the present invention.
Figure 7 is a flow diagram of the method for realizing integrity protection in embodiment 5 of the present invention.
Figure 8 is a structure diagram of RN in embodiment 6 of the present invention.
Figure 9 is a structure diagram of RN in embodiment 7 of the present invention.
Figure 10 is a structure diagram of base station in embodiment 8 of the present invention.
Figure 11 is a structure diagram of base station in embodiment 9 of the present invention.
Figure 12 is a structure diagram of base station in embodiment 10 of the present invention.
Figure 13 is a structure diagram of system for realizing integrity protection in embodiment 11 of the present invention.

### DETAILED DESCRIPTION OF THE EMBODIMENTS OF THE PRESENT INVENTION

The embodiment of the present invention provides a method for realizing integrity protection of S1-AP messages and X2-AP messages on radio interface, MME establishes bearer for RN to transmit S1-AP messages and X2-AP messages during RN startup procedure, or base station independently establishes several RN DRBs to transmit S1-AP messages and X2-AP messages during RN startup procedure, or activating integrity protection for some bearers with specific QoS to transmit S1-AP messages and X2-AP messages.

Embodiment of this invention will be clearly and completely described with following figures. Apparently, the following embodiment is only a part of this invention, but not the whole invention. All the embodiments achieved by general technical staff in this field based on this application without creative work belong to the protection scope of the present application.

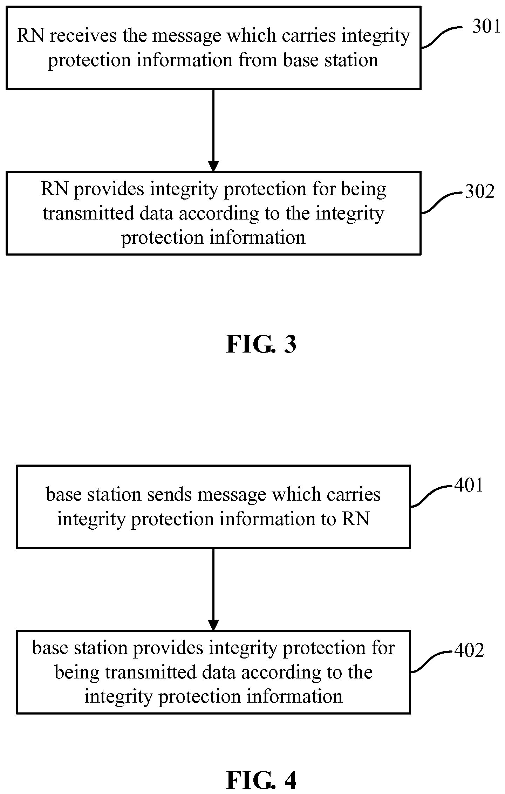

Figure 3 is a flow diagram of the method for realizing integrity protection in embodiment 1 of the present invention, comprising the following steps:
Step 301, RN receives the message which carries integrity protection information from base station.
Step 302, RN provides integrity protection for being transmitted data according to the integrity protection information.

Specifically, before above-mentioned RN receives the message which carries integrity protection information from base station, further comprising: MME which serves RN sends Create Session Request message which carries establishment cause information for E-RAB to S-GW which serves RN; S-GW sends Create Session Request message which carries establishment cause information for E-RAB to P-GW which serves RN; MME sends Initial Context Setup Request message which carries establishment cause information for E-RAB or E-RAB Setup Request message which carries establishment cause information for E-RAB to base station; base station sends message which carries integrity protection information to RN, integrity protection information is used for indicating RN DRB which activates integrity protection.

Above-mentioned integrity protection information is used for transmitting RN DRB of S1-AP messages and RN DRB of X2-AP messages. Therein, S1-AP is S1 Interface Application Protocol, S1 interface is the interface between MME and eNB or the interface between MME and base station (i.e. DeNB), using for transmitting control plane information; X2-AP is X2 Interface Application Protocol, X2 interface is the interface between eNB and eNB, or the interface between eNB and base station, or the interface between RN and base station, namely, the interface between base station and base station, using for transmitting control plane information.

Before above-mentioned RN receives the message which carries integrity protection information from base station, further comprising: network side allocates specific QoS parameter for Un radio bearer; network side establishes bearer corresponding to QoS parameter when RN accesses to network, bearer is used for transmitting S1-AP messages and X2-AP messages.

Before above-mentioned network side allocates specific QoS parameter for Un radio bearer, further comprising:
RN requests network side to allocate specific QoS parameter for the RN, parameter is used for transmitting S1-AP messages and X2-AP messages.

Therein, above-mentioned message which carries integrity protection information could be RRC Connection Reconfiguration message. It should be noted that the technical proposal of the embodiments of the present invention takes RRC Connection Reconfiguration message as example, but the invention is not limited by using RRC Connection Reconfiguration message, any specific message which carries integrity protection information could also realize the technical proposal of embodiment of the present invention.

The technical proposal of the embodiments of the present invention has the following advantage. Providing S1-AP messages and X2-AP messages with integrity protection on Un interface by activating integrity protection for the bearer which transmitting S1-AP messages and X2-AP messages.

Figure 4 is a flow diagram of the method for realizing integrity protection in embodiment 2 of the present invention, comprising the following steps:
Step 401, base station sends message which carries integrity protection information to RN;
Step 402, base station provides integrity protection for being transmitted data according to the integrity protection information.

Specifically, before above-mentioned base station sends message which carries integrity protection information to RN, further comprising: base station receives Initial Context Setup Request message which carries establishment cause information for E-RAB or E-RAB Setup Request message which carries establishment cause information for E-RAB from MME which serves RN.

Before above-mentioned base station receives Initial Context Setup Request message which carries establishment cause information for E-RAB or E-RAB Setup Request information which carries establishment cause information for E-RAB from MME which serves RN, further comprising: MME sends Create Session Request message which carries establishment cause information for E-RAB to S-GW which serves RN; S-GW sends Create Session Request message which carries establishment cause information for E-RAB to P-GW which serves RN.

Before above-mentioned base station sends message which carries integrity protection information to RN, further comprising: network side allocates specific QoS parameter for Un radio bearer; network side establishes bearer corresponding to QoS parameter when RN accesses to network, bearer is used for transmitting S1-AP messages and X2-AP messages.

Before above-mentioned P-GW which serves RN allocating specific QoS parameter for Un radio bearer, further comprising: RN requests network side to allocate specific QoS parameter for RN, parameter is used for transmitting S1-AP messages and X2-AP messages.

Therein, above-mentioned message which carries integrity protection information could be RRC Connection Reconfiguration message.

The technical proposal of the embodiments of the present invention has the following advantage. Providing S1-AP messages and X2-AP messages with integrity protection on Un interface by activating integrity protection for the bearer which transmitting S1-AP messages and X2-AP messages.

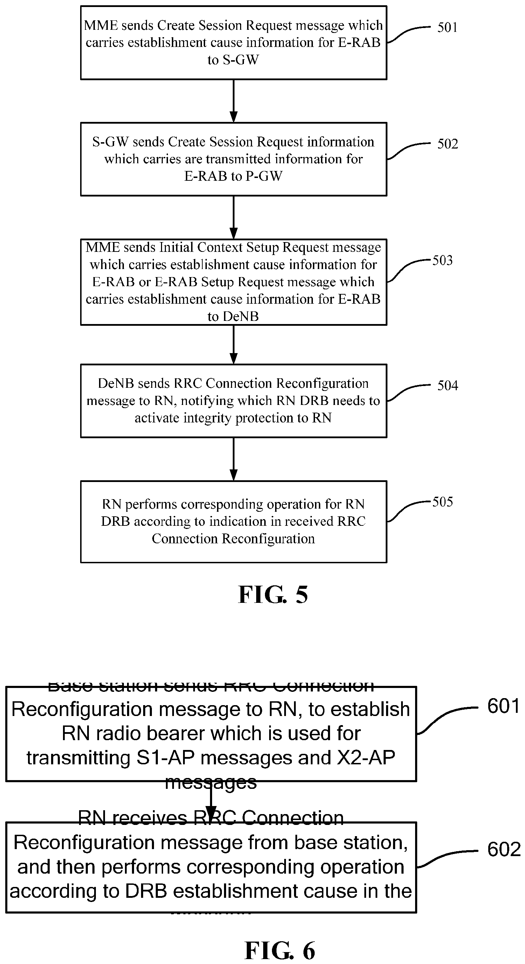

Figure 5 is a flow diagram of the method for realizing integrity protection in embodiment 3 of the present invention, comprising following steps:
Step 501, MME sends Create Session Request message which carries establishment cause information for E-RAB to S-GW.
Specifically, when RN startup, MME which serves RN initiates E-RAB establishment, and determine which E-RAB is used for transmitting S1-AP messages and X2-AP messages, and then includes establishment cause information for E-RAB in Create Session Request message sent to S-GW.
Therein, the establishment cause information for E-RAB includes three values: data, S1-AP and X2-AP; or includes only two values: data and signaling. If using the first classification method, S1-AP messages and X2-AP messages are transmitted in different bearers; if using the second classification method, S1-AP messages and X2-AP messages are transmitted in the same bearer.
Step 502, S-GW sends Create Session Request information which carries are transmitted information for E-RAB to P-GW.
Specifically, S-GW forwards received establishment cause information for E-RAB in Create Session Request information to P-GW.
Step 503, MME sends Initial Context Setup Request message which carries establishment cause information for E-RAB or E-RAB Setup Request message which carries establishment cause information for E-RAB to base station.
Specifically, as an example, an "E-RAB establishment cause" IE can be added in Initial Context Setup Request message or E-RAB Setup Request message. Table 1 is a format table of new enhancive IE/Group Name.

**Table 1 IE/Group Name format table**

| **IE/Group Name** | **Presence** | **Range** | **IE type and reference** | **Semantics description** |
|---|---|---|---|---|
| establishmentCause | O | | ENUMERATED {data, signalling, ... } or ENUMERATED {data, S1-AP, X2-AP ...} | |

Step 504, base station sends RRC Connection Reconfiguration message to RN, notifying which RN DRB needs to activate integrity protection to RN.
Specifically, if establishment cause information for E-RAB received by base station is used for transmitting S1-AP and X2-AP, base station activates integrity protection for the RN DRB when establishing RN DRB on Un interface, and notifies to RN which RN DRB need to activate integrity protection by RRC Connection Reconfiguration information. When base station and RN establish RN radio bearer on Un interface, integrity protection for above-mentioned RN E-RAB is activated.
Step 505, RN performs corresponding operation for RN DRB according to indication in received RRC Connection Reconfiguration.

Specifically, when RN and base station need to transmit S1-AP messages and X2-AP messages on Un interface, transmitting the message in RN radio bearer which has activated integrity protection.

Above-mentioned method applies to candidate architecture 1, 2, 3 in 3GPP, therein, in candidate architecture 1 case, when P-GW sends S1-AP messages or X2-AP messages to RN in downlink direction, putting the message in already established RN EPS bearer; in uplink direction, RN puts S1-AP messages and X2-AP messages sent to base station in RN DRB which has already been established and activated integrity protection, as a consequence, S1-AP messages and X2-AP messages could obtain integrity protection on Un interface.

Candidate architecture 2 and candidate architecture 3 integrate S-GW/P-GW function in base station, accordingly, in downlink direction, when base station sends S1-AP messages or X2-AP messages to RN, transmitting the messages in RN DRB which has already been established and activated integrity protection; uplink direction transmission is the same with candidate architecture 1.

It should be noted that the step order in the embodiment of the present invention could be adjusted according to requirement.

The technical proposal of the embodiments of the present invention has the following advantages. Providing S1-AP messages and X2-AP messages with integrity protection on Un interface by activating integrity protection for the bearers which transmitting S1-AP messages and X2-AP messages. Resolving the problem that S1-AP messages and X2-AP messages can't obtain integrity protection when S1-AP messages and X2-AP messages are transmitted on radio data bearer according to existing technology and resolving the problem of radio interface efficiency decrease when Un interface activates integrity protection for all RN DRBs, it could realize integrity protection for S1-AP messages and X2-AP messages on Un interface. It could be used in LTE, 3G system and so on to ensure integrity protection or encryption in radio interface when necessary.

Figure 6 is a flow diagram of the method for realizing integrity protection in embodiment 4 of the present invention, comprising following steps:
Step 601, base station sends RRC Connection Reconfiguration message to RN, to establish RN radio bearer which is used for transmitting S1-AP messages and X2-AP messages.

Therein, RadioResourceConfigDedicated IE in RRC Connection Reconfiguration message contains RN DRB establishment or modification information. Except for RN DRB required by core network, base station also could establish a number of additional RN DRBs used for transmitting S1-AP messages and X2-AP messages via RRC Connection Reconfiguration message, core network doesn't have corresponding E-RAB to above-mentioned RN DRB, that is to say, base station can independently establishes a number of RN DRB to transmit S1-AP messages and X2-AP messages. The establishment methods of RN DRB comprise following 3 solutions:
(1) base station could add indicator per new RN DRB in RadioResourceConfigDedicated IE, the indicator is used for indicating whether to activate integrity protection or not.
   For RN DRB which is used for transmitting S1-AP messages or X2-AP messages, base station activates integrity protection; for RN DRB which is used for transmitting user data, base station doesn't activate integrity protection. The indicator of integrity activation could use Boolean style, for example, 1 means activation, 0 means non-activation; certainly, it also could use other protocol data style to indicate integrity activation.
(2) base station could add establishment cause per new RN DRB in RadioResourceConfigDedicated IE. Therein, establishment cause of RN DRB could be used for transmitting user data or signalling and so on.

DeNB sets establishment cause of RN DRB which is used for transmitting S1-AP messages and X2-AP messages to "signalling", and activating integrity protection in PDCP entity configured for the RN DRB; base station sets establishment cause of RN DRB which is used for transmitting user data to "data", and does not activate integrity protection in PDCP entity configured for the RN DRB.

Base station also could set establishment cause of RN DRB to "for user data", "for S1-AP messages", "for X2-AP messages" and so on.

Base station sets establishment cause of RN DRB which is used for transmitting S1-AP messages to "S1AP", and activates integrity protection in PDCP entity configured for the RN DRB; base station sets establishment cause of RN DRB which is used for transmitting X2-AP messages to "X2AP", and activates integrity protection in PDCP entity configured for the RN DRB; base station sets "data" for establishment cause of RN DRB which is used for transmitting user data, and does not activate integrity protection in PDCP entity configured for the RN DRB.

Base station also could combine above-mentioned two options to add establishment cause per new RN DRB in RadioResourceConfigDedicated IE.

It needs to illustrate that above-mentioned information element could be introduced in RadioResourceConfigDedicated IE in an optional way when establishing DRBs with RN. When UE is connected to base station directly, above-mentioned information element will not be introduced when establishing UE DRB on radio interface. It could save radio interface cost. Certainly, above-mentioned information element also could be used in a mandatory way.

Step 602, RN receives RRC Connection Reconfiguration message from base station, and then performs corresponding operation according to DRB establishment cause in the message.

Specifically, after RN DRB establish successfully, base station and RN put S1-AP messages and X2-AP messages which need transmitting on Un interface in corresponding RN DRB which has activated integrity protection to transmit. A RN radio bearer could transmit both S1-AP messages and X2-AP messages or transmit one of them barely.

Above-mentioned methods apply to candidate architecture 2 and 3 of 3GPP.

The technical proposal of the embodiments of the present invention have the following advantages. Providing S1-AP messages and X2-AP messages with integrity protection on Un interface by activating integrity protection for the bearers which transmitting S1-AP messages and X2-AP messages. Resolving the problem that S1-AP messages and X2-AP messages can't obtain integrity protection when S1-AP messages and X2-AP messages are transmitted on radio data bearer by existing technology, and resolving the problem of radio interface efficiency decrease when Un interface activates integrity protection for all RN DRBs, it could realize integrity protection for S1-AP messages and X2-AP messages on Un interface. It could be used in LTE, 3G system and so on to ensure integrity protection or encryption in radio interface when necessary.

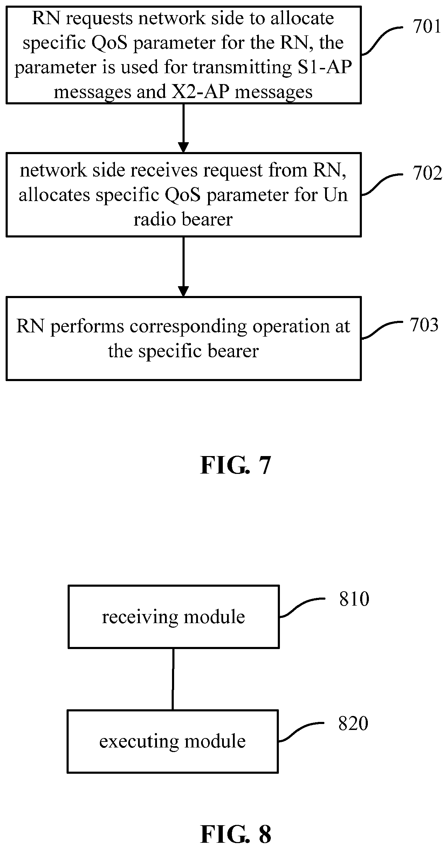

Figure 7 is a flow diagram of the method for realizing integrity protection in embodiment 5 of the present invention, comprising following steps:
Step 701, RN requests network side to allocate specific QoS parameter for the RN, the parameter is used for transmitting S1-AP messages and X2-AP messages.

Therein, QoS parameter could be QCI, QCI has nine values at the present, and the values are one to nine respectively. Network side could increase a number of QCI value selections to transmit S1-AP messages and X2-AP messages, it could increase a number of RN DRBs (the number of RN DRBs are 8 at best at the present) or select one or more existing RN DRBs, the DRBs are used for transmitting S1-AP messages and X2-AP messages.

Specifically, when RN startup, it could request network to establish two bearers about QCI=10 and QCI=11 by single bearer resource allocation procedure or bearer resource modification procedure, for example, notifying network by setting QCI of Required traffic flow QoS IE to 10 and 11.

Step 702, network side receives request from RN, allocates specific QoS parameter for Un radio bearer.

Specifically, MME sends Bearer Resource Command to S-GW after receiving request from RN, S-GW forwards the Bearer Resource Command to P-GW.

Network side could establish new bearer resource for RN if the request of RN received by network side. P-GW sends Create Bearer Request message to S-GW, the message contains established bearer resources about QCI=10 and QCI=11. S-GW forwards Create Bearer Request message to MME. MME sends Initial Context Setup Request or E-RAB Setup Request to base station, notifying new bearer information to base station, base station activates integrity protection for new bearer which is used for transmitting S1-AP messages and X2-AP messages. Base station sends RRC Connection Reconfiguration message to RN, establishing RN DRB for above-mentioned bearer on Un interface. Above-mentioned Initial Context Setup Request or E-RAB Setup Request contains EPS bearer context activation information which MME sends to RN, RN establishes bearer which is used for transmitting S1-AP messages and X2-AP messages after receiving the message, and activates integrity protection for it on Un interface.

Network side could also modify existing bearer resource to transmit S1-AP messages and X2-AP messages for RN. P-GW sends Update Bearer Request message to S-GW, the message contains modified bearer resource about QCI=10 and QCI=11. S-GW forwards Create Bearer Request message to MME. MME sends E-RAB Modification Request to base station, notifying modified bearer information to base station. Base station activates integrity protection for modified bearer which is used for transmitting S1-AP messages and X2-AP messages. Base station sends RRC Connection Reconfiguration to RN, establishing RN DRB for above-mentioned bearer on Un interface. Above-mentioned E-RAB Modification Request contains EPS bearer context modification information sent to RN. When RN receives the massage, RN modifies corresponding bearer to transmit S1-AP messages and X2-AP messages, and activates integrity protection for it on Un interface.

Above-mentioned bearer resource allocation procedure or bearer resource modification procedure could also be completed with attachment procedure when RN startup.

P-GW establishes specific bearer corresponding to above-mentioned specific QoS parameter when RN accesses to network.

Specifically, supposing increased QCI values are 10 and 11. P-GW needn't establish two bearers about QCI=10 and QCI=11 when UE accesses. P-GW needs to establish above-mentioned two specific bearers to transmit S1-AP messages and X2-AP messages when RN accesses to network. MME, base station and RN acquiescently obtain that transmitting S1-AP messages and X2-AP messages at above-mentioned two bearers. PCRF needs to learn that access entity is UE or RN when RN startup.

Step 703, RN performs corresponding operation at the specific bearer.

Specifically, after specific bearer corresponding to specific QoS parameter has been setup, base station and RN transmit S1-AP messages and X2-AP messages which need to be transmitted on Un interface in corresponding RN DRB, and the RN DRB has been activated integrity protection. A RN radio bearer could transmit S1-AP messages and X2-AP messages or transmit one of them barely.

It should be noted that network side can also initiate bearer setup or modification even when it doesn't receive request from RN. The newly established or modified bearer is used for transmitting S1-AP messages and X2-AP messages. The embodiment of the present invention applies to candidate architecture 1, 2, 3 in 3GPP.

The technical proposal of the embodiments of the present invention have the following advantages. Providing S1-AP messages and X2-AP messages with integrity protection on Un interface by activating integrity protection for the bearers which transmitting S1-AP messages and X2-AP messages. Resolving the problem that S1-AP messages and X2-AP messages can't obtain integrity protection when S1-AP messages and X2-AP messages are transmitted on radio data bearer by existing technology and resolving the problem of radio interface efficiency decrease when Un interface activates integrity protection for all RN DRBs, it could realize integrity protection for S1-AP messages and X2-AP messages on Un interface. It could be used in LTE, 3G system and so on to ensure integrity protection or encryption in radio interface when necessary.

Figure 8 is a structure diagram of RN in embodiment 6 of the present invention, comprising:
receiving module 810, is used for receiving the message which carrying integrity protection information from base station.
executing module 820, is used for executing integrity protection for being transmitted data according to the integrity protection information.

Therein, above-mentioned message which carries integrity protection information could be RRC Connection Reconfiguration message.

The technical proposal of the embodiments of the present invention has the following advantage. Providing S1-AP messages and X2-AP messages with integrity protection on Un interface by activating integrity protection for the bearer which transmitting S1-AP messages and X2-AP messages.

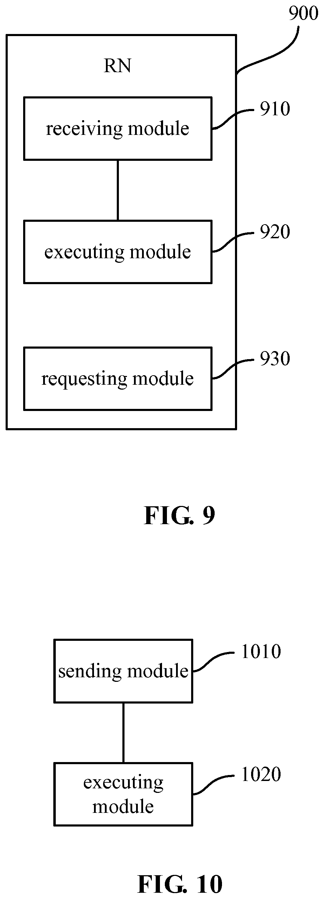

Figure 9 is a structure diagram of RN in embodiment 7 of the present invention, the RN 900 comprises:
receiving module 910, is used for receiving RRC Connection Reconfiguration message from base station, RRC Connection Reconfiguration message carrying integrity protection information.

Executing module 920, is used for executing integrity protection for being transmitted data according to integrity protection information which being carried by RRC Connection Reconfiguration message received by receiving module 910.

Requesting module 930, is used for requesting network side to allocate specific QoS parameter, the parameter is used for transmitting S1-AP messages and X2-AP messages.

The technical proposal of the embodiments of the present invention has the following advantages. Providing S1-AP messages and X2-AP messages with integrity protection on Un interface by activating integrity protection for the bearers which transmitting S1-AP messages and X2-AP messages. Resolving the problem that S1-AP messages and X2-AP messages can't obtain integrity protection when S1-AP messages and X2-AP messages are transmitted radio data bearer by existing technology and resolving the problem of radio interface efficiency decrease when Un interface activates integrity protection for all RN DRBs, it could realize integrity protection for S1-AP messages and X2-AP messages on Un interface. It could be used in LTE, 3G system and so on to ensure integrity protection or encryption in radio interface when necessary.

Figure 10 is a structure diagram of base station in embodiment 8 of the present invention, comprising:
sending module 1010, is used for sending the message which carrying integrity protection information to RN.

Executing module 1020, is used for executing integrity protection for being transmitted data according to the integrity protection information sent by sending module 1010.

Therein, above-mentioned message which carries integrity protection information could be RRC Connection Reconfiguration message.

The technical proposal of the embodiments of the present invention has the following advantage. Providing S1-AP messages and X2-AP messages with integrity protection on Un interface by activating integrity protection for the bearer which transmitting S1-AP messages and X2-AP messages.

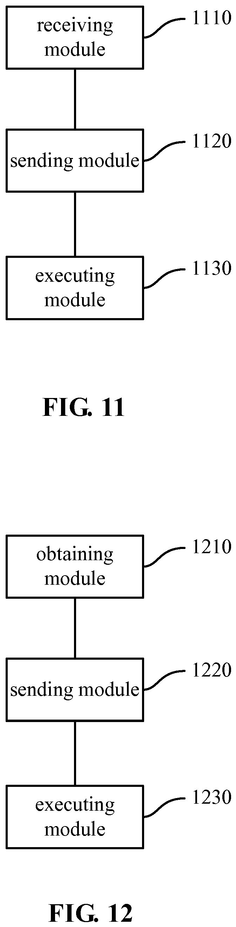

Figure 11 is a structure diagram of base station in embodiment 9 of the present invention, comprising:
receiving module 1110, is use for receiving Initial Context Setup Request message which carrying establishment cause information for E-RAB or E-RAB Setup Request message which carrying establishment cause information for E-RAB from MME which serving RN, sending module 1120 using the establishment cause information which established by E-RAB.

Sending module 1120, is used for sending RRC Connection Reconfiguration message which carrying integrity protection information to RN.

Executing module 1130, is used for executing integrity protection for being transmitted data according to integrity protection information which sent by sending module 1120.

The technical proposal of the embodiments of the present invention has the following advantages. Providing S1-AP messages and X2-AP messages with integrity protection on Un interface by activating integrity protection for the bearers which transmitting S1-AP messages and X2-AP messages. Resolving the problem that S1-AP messages and X2-AP messages can't obtain integrity protection when S1-AP messages and X2-AP messages are transmitted on radio data bearer by existing technology and resolving the problem of radio interface efficiency decrease when Un interface activates integrity protection for all RN DRBs, it could realize integrity protection for S1-AP messages and X2-AP messages on Un interface. It could be used in LTE, 3G system and so on to ensure integrity protection or encryption in radio interface when necessary.

Figure 12 is a structure diagram of base station in embodiment 10 of the present invention, comprising:
obtaining module 1210, is used for receiving QoS parameter from MME which serving RN, parameter is used for transmitting S1-AP messages and X2-AP messages to be used by sending module.

Sending module 1220, is used for sending RRC Connection Reconfiguration message which carrying integrity protection information to RN.

Executing module 1230, is used for executing integrity protection for being transmitted data according to integrity protection information which sent by sending module 1220.

The technical proposal of the embodiments of the present invention has the following advantages: Providing S1-AP messages and X2-AP messages with integrity protection on Un interface by activating integrity protection for the bearers which transmitting S1-AP messages and X2-AP messages; Resolving the problem that S1-AP messages and X2-AP messages can't obtain integrity protection when S1-AP messages and X2-AP messages are transmitted on radio data bearer by existing technology and resolving the problem of radio interface efficiency decrease when Un interface activates integrity protection for all RN DRBs. It could realize integrity protection for S1-AP messages and X2-AP messages on Un interface. It could be used in LTE, 3G system and so on to ensure integrity protection or encryption in radio interface when necessary.

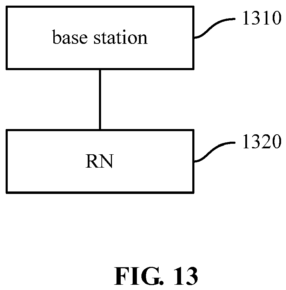

Figure 13 is a structure diagram of system for realizing integrity protection in embodiment 11 of the present invention, comprising:
base station 1310, is used for sending message which carrying integrity protection information to RN 1320, and executing integrity protection for being transmitted data according to the integrity protection information;
RN 1320, is used for receiving the message which carrying integrity protection information from base station 1310, executing integrity protection for being transmitted data according to the integrity protection information.

Therein, above-mentioned message which carries integrity protection information could be RRC Connection Reconfiguration message.

The technical proposal of the embodiments of the present invention has the following advantages: Providing S1-AP messages and X2-AP messages with integrity protection on Un interface by activating integrity protection for the bearers which transmitting S1-AP messages and X2-AP messages.

Through the description of the embodiments above, the technical staff in this field can understand clearly that the present invention can be implemented by software and necessary current hardware platform. Of course, it also can be implemented by hardware, but in many situations the former is the better. Based on this understanding, essence or section with contribution to existing technology of the technical proposal of the present invention can be embodied by a form of software product which can be stored in a storage medium, including a number of instructions for making a computer device (such as mobile phone, personal computers, servers, or network equipments, etc.) implement the methods described in the embodiments of the present invention.

The descriptions above are just preferred implement ways of the present invention. It should be pointed that, for general technical personnel in this field, some improvement and decorating can be done, which should be as the protection scope of the present invention.

The technical staff in this field can understand the modules of the devices in the embodiments can be set in the devices according to the description of the embodiments, also can be set in one or more devices different from the embodiments. Modules in the above-mentioned embodiments can be integrated in one entirety, also can be deployed separately, can be combined into one module, also can be further split into multiple sub-modules.

Serial numbers of the above-mentioned embodiments of the present invention are only used for description. It does not express whether the embodiment is excellent or poor.

## Claims

1. A method for realizing integrity protection, **characterized in that** the method comprises the following steps:
receiving (301), by a Relay Node (RN), a message carrying integrity protection information from a base station, wherein said integrity protection information is used for indicating a RN Data Radio Bearer (DRB) for which the integrity protection is needed to be activated;
providing (302), by said RN, integrity protection for data being transmitted according to said integrity protection information,
wherein, before receiving (301) by said RN the message carrying the integrity protection information from the base station, the method further comprising:
sending (503) to said base station, by a Mobility Management Entity (MME), an initial context setup request message carrying cause information for establishing an E-UTRAN (Evolved Universal Terrestrial Radio Access Network) Radio Access Bearer (E-RAB) or an E-RAB setup request message carrying the cause information for establishing the E-RAB, wherein the cause information for establishing the E-RAB comprises three values: data, S1 Interface Application Protocol (S1-AP) and X2 Interface Application Protocol (X2-AP), or comprises two values: data and signaling.

2. The method of claim 1, wherein, before receiving (301) by said RN the message carrying the integrity protection information from the base station, the method further comprising:
sending (501) to a Serving Gateway (S-GW) serving said RN, by the MME serving said RN, a create-session request message carrying the cause information for establishing the E-RAB;
sending (502), by said S-GW, the create-session request message carrying the cause information for establishing the E-RAB to a PDN (Packet Data Network) Gateway (P-GW) serving said RN;
sending (504), by said base station, the message carrying the integrity protection information to said RN.

3. The method of claim 1, wherein said integrity protection information is used for transmitting a RN DRB of S1-AP messages and a RN DRB of X2-AP messages.

4. The method of claim 1 or 2, wherein, before receiving (301) by said RN the message carrying the integrity protection information from the base station, the method further comprising:
allocating, by a network side device, a specific Quality of Service (QoS) parameter for an Un radio bearer which is a radio bearer between RN and base station ;
establishing, by said network device, a bearer corresponding to said QoS parameter when said RN accessing to network, wherein said bearer is used for transmitting S1-AP messages and X2-AP messages.

5. The method of claim 1, 2 or 3, wherein said message carrying the integrity protection information is a Radio Resource Control (RRC) connection reconfiguration message.

6. A method for realizing integrity protection, **characterized in that** the method comprises the following steps:
sending (401), by said base station, a message carrying integrity protection information to a RN, wherein said integrity protection information is used for indicating a RN DRB for which the integrity protection is needed to be activated;
providing (402), by said base station, integrity protection for data being transmitted according to said integrity protection information,
wherein, before sending (401) by said base station the message carrying the integrity protection information to the RN, the method further comprising:
receiving from a MME serving said RN, by said base station, an initial context setup request message carrying cause information for establishing an E-RAB or an E-RAB setup request message carrying the cause information for establishing the E-RAB, wherein the cause information for establishing the E-RAB comprises three values: data, S1-AP and X2-AP, or comprises two values: data and signaling.

7. The method of claim 6, wherein, before receiving from the MME serving said RN by said base station the initial context setup request message carrying the cause information for establishing the E-RAB or the E-RAB setup request information carrying the cause message for establishing the E-RAB, the method further comprising:
sending (501), by said MME, a create-session request message carrying cause information for establishing the E-RAB to a S-GW serving said RN;
sending (502), by said S-GW, the create-session request message carrying the cause information for establishing the E-RAB to the P-GW serving said RN.

8. The method of claim 6, wherein, before sending (401) by said base station the message carrying the integrity protection information to the RN, the method further comprising:
allocating, by a network side device, a specific QoS parameter for an Un radio bearer which is a radio bearer between the RN and the base station ;
establishing, by said network side device, a bearer corresponding to said QoS parameter when said RN accessing to network, wherein said bearer is used for transmitting S1-AP messages and X2-AP messages.

9. The method of claim 6 or 7, wherein, said message carrying integrity protection information is a RRC connection reconfiguration message.

10. A Relay Node (RN), **characterized in that** the RN comprises:
a receiving module (810, 910), which is used for receiving a message carrying integrity protection information from a base station, wherein said integrity protection information is used for indicating a RN DRB for which the integrity protection is needed to be activated;
an executing module (820, 920), which is used for executing integrity protection for data being transmitted according to said integrity protection information,
wherein after the base station receives from a MME serving said RN an initial context setup request message carrying cause information for establishing an E-RAB or an E-RAB setup request message carrying the cause information for establishing the E-RAB, the base station sends the message carrying the integrity protection information to the receiving module (810, 910), wherein the cause information for establishing the E-RAB comprises three values: data, S1-AP and X2-AP, or comprises two values: data and signaling.

11. A base station, **characterized in that** the base station comprises:
a sending module (1010, 1120, 1220), which is used for sending a message carrying integrity protection information to a RN, wherein said integrity protection information is used for indicating a RN DRB for which the integrity protection is needed to be activated;
an executing module (1020, 1130, 1230), which is used for executing integrity protection for data being transmitted according to the integrity protection information sent by said sending module (1010, 1120, 1220);
a receiving module (1110), which is used for receiving from a MME serving said RN an initial context setup request message carrying cause information for establishing an E-RAB or an E-RAB setup request message carrying the cause information for establishing the E-RAB, wherein the cause information is to be used by the sending module (1120), and the cause information for establishing the E-RAB comprises three values: data, S1-AP and X2-AP, or comprises two values: data and signaling.

12. A base station of claim 11, further comprising:
an obtaining module (1210), which is used for receiving a QoS parameter to be used by said sending module (1220) from the MME serving said RN, wherein said parameter is used for transmitting S1-AP messages and X2-AP messages.

13. A system for realizing integrity protection, **characterized in that** the system comprises:
a base station (1310), which is used for sending a message carrying integrity protection information to a RN, and executing integrity protection for data being transmitted according to said integrity protection information, wherein said integrity protection information is used for indicating a RN DRB for which the integrity protection is needed to be activated;
the RN (1320), which is used for receiving the message carrying the integrity protection information from the base station, and executing integrity protection for data being transmitted according to said integrity protection information,
wherein, before said base station sends the message carrying the integrity protection information to the RN, said base station receives from a MME serving said RN an initial context setup request message carrying cause information for establishing an E-RAB or an E-RAB setup request message carrying the cause information for establishing the E-RAB, wherein the cause information for establishing the E-RAB comprises three values: data, S1-AP and X2-AP, or comprises two values: data and signaling.

## Patentansprüche

1. - Verfahren zur Herstellung eines Integritätsschutzes, **gekennzeichnet durch** die folgenden Phasen:
Empfang (301), durch einen Relaisknoten (RN), einer Meldung mit Integritätsschutzinformationen von einer Basisstation, wobei die Integritätsschutzinformationen benutzt werden, um einen RN-Datenfunkträger (DRB) anzuzeigen, für den die Aktivierung des Integritätsschutzes gebraucht wird;
Bereitstellung (302), durch den RN, von Integritätsschutz für Daten, die gemäß den Integritätsschutzinformationen übertragen werden,
wobei, vor dem Empfang (301) der Meldung mit den Integritätsschutzinformationen von der Basisstation durch den RN, das Verfahren des Weiteren folgendes umfasst:
Senden (503) an die Basisstation, durch einen Mobilitätsmanagementknoten (MME), einer anfänglichen Kontexteinrichtungsanfrage mit Ursacheninformationen zum Aufbau eines E-UTRAN (Evolved Universal Terrestrial Radio Access Network)-Funkzugangskanals (E-RAB), oder einer E-RAB-Einrichtungs-Anfrage mit Ursacheninformationen zum Aufbau des E-RABs, wobei die Ursacheninformationen zum Aufbau des E-RABs drei Werte umfassen: Daten, Sl-Schnittstellen-Anwendungsprotokoll (S1-AP) und X2-Schnittstellen-Anwendungsprotokoll (X2-AP), oder zwei Werte umfassen: Daten und Signale.

2. - Verfahren nach Anspruch 1, wobei, vor Empfang (301) der Meldung mit den Integritätsschutzinformationen von der Basisstation durch den RN, das Verfahren des Weiteren folgendes umfasst:
Senden (501) an ein Serving Gateway (S-GW), das den RN bedient, durch den MME, der den RN bedient, einer Sitzungserzeugungsanfrage mit Ursacheninformationen zum Aufbau des E-RABs;
Senden (502), durch das S-GW, der Sitzungserzeugungsanfrage mit Ursacheninformationen zum Aufbau des E-RABs an ein PDN (Paketdatennetz)-Gateway (P-GW), das den RN bedient;
Senden (504), durch die Basisstation, der Meldung mit Integritätsschutzinformationen an den RN.

3. - Verfahren nach Anspruch 1, wobei die Integritätsschutzinformationen zur Übertragung eines RN-DRBs von Sl-AP-Meldungen und eines RN-DRBs von X2-AP-Meldungen benutzt wird.

4. - Verfahren nach Anspruch 1 oder 2, wobei, vor Empfang (301) der Meldung mit den Integritätsschutzinformationen von der Basisstation durch den RN, das Verfahren des Weiteren folgendes umfasst:
Zuteilung, durch eine netzseitige Einrichtung, eines spezifischen Servicequalitäts (QoS)-Parameters für einen Un-Funkträger, der ein Funkträger zwischen RN und Basisstation ist;
Erstellung, durch das Netzgerät, eines Trägers, der dem QoS-Parameter entspricht, wenn der RN auf das Netz zugreift, wobei besagter Träger zum Übertragen von Sl-AP-Meldungen und X2-AP-Meldungen benutzt wird.

5. - Verfahren nach Anspruch 1, 2 oder 3, wobei die Meldung mit den Integritätsschutzinformationen eine Radio-Resource-Control (RRC)-Verbindungsrekonfigurationsmeldung ist.

6. - Verfahren zur Herstellung eines Integritätsschutzes, **gekennzeichnet dadurch, dass** das Verfahren die folgenden Phasen umfasst:
Senden (401), durch die Basisstation, einer Meldung mit Integritätsschutzinformationen an einen RN, wobei die Integritätsschutzinformationen benutzt werden, um einen RN-DRB anzuzeigen, für den die Aktivierung des Integritätsschutzes gebraucht wird;
Bereitstellung (402), durch die Basisstation, von Integritätsschutz für Daten, die gemäß den Integritätsschutzinformationen übertragen werden,
wobei, vor dem Senden (401) der Meldung mit den Integritätsschutzinformationen durch die Basisstation an den RN, das Verfahren des Weiteren folgendes umfasst:
Empfang, von einem MME, der die RN bedient, durch die Basisstation, einer anfänglichen Kontexteinrichtungsanfrage mit Ursacheninformationen zum Aufbau eines E-RABs, oder einer E-RAB-Einrichtungs-Anfrage mit Ursacheninformationen zum Aufbau des E-RABs, wobei die Ursacheninformationen zum Aufbau des E-RABs drei Werte umfassen: Daten, Sl-Schnittstellen-Anwendungsprotokoll (S1-AP) und X2-Schnittstellen-Anwendungsprotokoll (X2-AP), oder zwei Werte umfassen: Daten und Signale.

7. - Verfahren nach Anspruch 6, wobei vor Empfang von dem MME, der die RN bedient, durch die Basisstation, der anfänglichen Kontexteinrichtungsanfrage mit Ursacheninformationen zum Aufbau des E-RABs oder der E-RAB-Einrichtungs-Anfragen-Informationen mit der Ursachenmeldung zum Aufbau des E-RABs, das Verfahren des Weiteren folgendes umfasst:
Senden (501), durch die MME, einer Sitzungserzeugungsanfrage mit Ursacheninformationen zum Aufbau des E-RABs an ein S-GW, das die RN bedient;
Senden (502), durch die S-GW, der Sitzungserzeugungsanfrage mit den Ursacheninformationen zum Aufbau des E-RABs an das P-GW, das die RN bedient.

8. - Verfahren nach Anspruch 6, wobei, vor dem Senden (401) durch die Basisstation der Meldung mit den Integritätsschutzinformationen an den RN, das Verfahren des Weiteren folgendes umfasst:
Zuteilung, durch eine netzseitige Einrichtung, eines spezifischen QoS-Parameters für einen Un-Funkträger, der ein Funkträger zwischen dem RN und der Basisstation ist;
Erstellung, durch die netzseitige Einrichtung, eines Trägers, der dem QoS-Parameter entspricht, wenn der RN auf das Netz zugreift, wobei besagter Träger zum Übertragen von Sl-AP-Meldungen und X2-AP-Meldungen benutzt wird.

9. - Verfahren nach Anspruch 6 oder 7, wobei die Meldung mit Integritätsschutzinformationen eine RRC-Verbindungsrekonfigurations-Meldung ist.

10. - Relaisknoten (RN), **gekennzeichnet dadurch, dass** der RN folgendes umfasst:
ein Empfangsmodul (810,910) zum Empfang einer Meldung mit Integritätsschutzinformationen von einer Basisstation, wobei die Integritätsschutzinformationen benutzt werden, um einen RN-DRB anzuzeigen, für den die Aktivierung des Integritätsschutzes gebraucht wird;
ein Durchführungsmodul (820,920), das zur Durchführung des Integritätsschutzes für Daten benutzt wird, die gemäß besagten Integritätsschutzinformationen übertragen werden,
wobei, nachdem die Basisstation von einem MME, der die RN bedient, eine anfängliche Kontexteinrichtungsanfrage mit Ursacheninformationen zum Aufbau eines E-RABs empfangen hat, oder eine E-RAB-Einrichtungs-Anfrage mit den Ursacheninformationen zum Aufbau des E-RABs, die Basisstation die Meldung mit den Integritätsschutzinformationen an das Empfangsmodul (810, 910) sendet, wobei die Ursacheninformationen zum Aufbau des E-RABs drei Werte umfassen: Daten, S1-AP und X2-AP, oder zwei Werte umfassen: Daten und Signale.

11. - Basisstation, **gekennzeichnet dadurch, dass** sie folgendes umfasst:
ein Sendemodul (1010, 1120, 1220) zum Senden einer Meldung mit Integritätsschutzinformationen an einen RN, wobei die Integritätsschutzinformationen benutzt werden, um einen RN-DRB anzuzeigen, für den die Aktivierung des Integritätsschutzes gebraucht wird;
ein Durchführungsmodul (1020, 1130, 1230) zur Durchführung des Integritätsschutzes für Daten, die gemäß den Integritätsschutzinformationen übertragen werden, die vom Sendemodul (1010, 1120, 1220) geschickt wurden;
ein Empfangsmodul (1110) zum Empfang, von einem MME, der die RN bedient, einer anfänglichen Kontexteinrichtungsanfrage mit Ursacheninformationen zum Aufbau eines E-RAB oder einer E-RAB-Einrichtungs-Anfrage mit Ursacheninformationen zum Aufbau des E-RABs, wobei die Ursacheninformationen vom Sendemodul (1120) benutzt werden und die Ursacheninformationen zum Aufbau des E-RABs drei Werte umfassen: Daten, S1-AP und X2-AP, oder zwei Werte umfassen: Daten und Signale.

12. - Basisstation nach Anspruch 11, die des Weiteren folgendes umfasst:
ein Erhaltungsmodul (1210), das für den Empfang eines vom Sendemodul (1220) zu benutzenden QoS-Parameters benutzt wird, von dem MME, der die RN bedient, wobei besagter Parameter zum Übertragen von Sl-AP-Meldungen und X2-AP-Meldungen benutzt wird.

13. - System zur Herstellung eines Integritätsschutzes, **gekennzeichnet dadurch, dass** es folgendes umfasst:
eine Basisstation (1310) zum Senden einer Meldung mit Integritätsschutzinformationen an einen RN, und zum Durchführen von Integritätsschutz für Daten, die gemäß der Integritätsschutzinformationen übertragen werden, wobei die Integritätsschutzinformationen benutzt werden, um einen RN-DRB anzuzeigen, für den die Aktivierung des Integritätsschutzes gebraucht wird;
den RN (1320), der zum Empfang des Meldung mit Integritätsschutzinformationen von der Basisstation benutzt wird und Integritätsschutz für Daten durchführt, die gemäß den Integritätsschutzinformationen übertragen werden,
wobei, bevor die Basisstation die Meldung mit den Integritätsschutzinformationen an den RN sendet, die Basisstation von einem MME, der die RN bedient, eine anfänglichen Kontexteinrichtungsanfrage mit Ursacheninformationen zum Aufbau eines E-RAB empfängt, oder eine E-RAB-Einrichtungs-Anfrage mit Ursacheninformationen zum Aufbau des E-RABs, wobei die Ursacheninformationen zum Aufbau des E-RABs drei Werte umfassen: Daten, S1-AP und X2-AP, oder zwei Werte umfassen: Daten und Signale.

## Revendications

1. - Procédé pour réaliser une protection d'intégrité, **caractérisé en ce que** le procédé comprend les étapes suivantes :
recevoir (301), par un noeud relais (RN), un message transportant des informations de protection d'intégrité à partir d'une station de base, lesdites informations de protection d'intégrité étant utilisées pour indiquer un support radio de données (DRB) de RN pour lequel la protection d'intégrité a besoin d'être activée ;
fournir (302), par ledit RN, une protection d'intégrité pour des données qui sont transmises selon lesdites informations de protection d'intégrité,
le procédé comprenant en outre, avant la réception (301) par ledit RN du message transportant les informations de protection d'intégrité à partir de la station de base :
envoyer (503) à ladite station de base, par une entité de gestion de mobilité (MME), un message de requête de configuration de contexte initial transportant des informations de cause pour établir un support d'accès radio de réseau d'accès radio terrestre universel évolué (E-UTRAN) (E-RAB) ou un message de requête de configuration d'E-RAB transportant les informations de cause pour établir l'E-RAB, les informations de cause pour établir l'E-RAB comprenant trois valeurs : des données, un protocole d'application d'interface S1 (S1-AP) et un protocole d'application d'interface X2 (X2-AP), ou comprenant deux valeurs : des données et une signalisation.

2. - Procédé selon la revendication 1, le procédé comprenant outre, avant la réception (301) par ledit RN du message transportant les informations de protection d'intégrité à partir de la station de base :
envoyer (501) à une passerelle de desserte (S-GW) desservant ledit RN, par la MME desservant ledit RN, un message de requête de création de session transportant les informations de cause pour établir l'E-RAB ;
envoyer (502), par ladite S-GW, le message de requête de création de session transportant les informations de cause pour établir l'E-RAB à une passerelle de réseau de données de paquets (PDN) (P-GW) desservant ledit RN ;
envoyer (504), par ladite station de base, le message transportant les informations de protection d'intégrité audit RN.

3. - Procédé selon la revendication 1, dans lequel lesdites informations de protection d'intégrité sont utilisées pour transmettre un DRB de RN de messages de S1-AP et un DRB de RN de messages de X2-AP.

4. - Procédé selon la revendication 1 ou 2, le procédé comprenant outre, avant la réception (301) par ledit RN du message transportant les informations de protection d'intégrité à partir de la station de base :
allouer, par un dispositif côté réseau, un paramètre de qualité de service (QoS) spécifique pour un support radio Un qui est un support radio entre le RN et la station de base ;
établir, par ledit dispositif de réseau, un support correspondant audit paramètre de QoS lorsque ledit RN accède au réseau, ledit support étant utilisé pour transmettre des messages de S1-AP et des messages de X2-AP.

5. - Procédé selon la revendication 1, 2 ou 3, dans lequel ledit message transportant les informations de protection d'intégrité est un message de reconfiguration de connexion de contrôle de ressources radio (RRC).

6. - Procédé pour réaliser une protection d'intégrité, **caractérisé en ce que** le procédé comprend les étapes suivantes :
envoyer (401), par ladite station de base, un message transportant des informations de protection d'intégrité à un RN, lesdites informations de protection d'intégrité étant utilisées pour indiquer un DRB de RN pour lequel la protection d'intégrité a besoin d'être activée ;
fournir (402), par ladite station de base, une protection d'intégrité pour des données qui sont transmises selon lesdites informations de protection d'intégrité,
le procédé comprenant en outre, avant l'envoi (401) par ladite station de base du message transportant les informations de protection d'intégrité au RN :
recevoir à partir d'une MME desservant ledit RN, par ladite station de base, un message de requête de configuration de contexte initial transportant des informations de cause pour établir un E-RAB ou un message de requête de configuration d'E-RAB transportant les informations de cause pour établir l'E-RAB, les informations de cause pour établir l'E-RAB comprenant trois valeurs : des données, S1-AP et X2-AP, ou comprenant deux valeurs : des données et une signalisation.

7. - Procédé selon la revendication 6, le procédé comprenant en outre, avant la réception à partir de la MME desservant ledit RN par ladite station de base du message de requête de configuration de contexte initial transportant les informations de cause pour établir l'E-RAB ou les informations de requête de configuration d'E-RAB transportant le message de cause pour établir l'E-RAB :
envoyer (501), par ladite MME, un message de requête de création de session transportant des informations de cause pour établir l'E-RAB à une S-GW desservant ledit RN ;
envoyer (502), par ladite S-GW, le message de requête de création de session transportant les informations de cause pour établir l'E-RAB à la P-GW desservant ledit RN.

8. - Procédé selon la revendication 6, le procédé comprenant en outre, avant l'envoi (401) par ladite station de base du message transportant les informations de protection d'intégrité au RN :
allouer, par un dispositif côté réseau, un paramètre de QoS spécifique pour un support radio Un qui est un support radio entre le RN et la station de base ;
établir, par ledit dispositif côté réseau, un support correspondant audit paramètre de QoS lorsque ledit RN accède au réseau, ledit support étant utilisé pour transmettre des messages de S1-AP et des messages de X2-AP.

9. - Procédé selon la revendication 6 ou 7, dans lequel ledit message transportant des informations de protection d'intégrité est un message de reconfiguration de connexion RRC.

10. - Noeud de relais (RN), **caractérisé en ce que** le RN comprend :
un module de réception (810, 910), qui est utilisé pour recevoir un message transportant des informations de protection d'intégrité à partir d'une station de base, lesdites informations de protection d'intégrité étant utilisées pour indiquer un DRB de RN pour lequel la protection d'intégrité a besoin d'être activée ;
un module d'exécution (820, 920), qui est utilisé pour exécuter une protection d'intégrité pour des données qui sont transmises selon lesdites informations de protection d'intégrité,
dans lequel, après que la station de base a reçu à partir d'une MME desservant ledit RN un message de requête de configuration de contexte initial transportant des informations de cause pour établir un E-RAB ou un message de requête de configuration d'E-RAB transportant les informations de cause pour établir l'E-RAB, la station de base envoie le message transportant les informations de protection d'intégrité au module de réception (810, 910), les informations de cause pour établir l'E-RAB comprenant trois valeurs : des données, S1-AP et X2-AP, ou comprenant deux valeurs : des données et une signalisation.

11. - Station de base, **caractérisée en ce que** la station de base comprend :
un module d'envoi (1010, 1120, 1220), qui est utilisé pour envoyer un message transportant des informations de protection d'intégrité à un RN, lesdites informations de protection d'intégrité étant utilisées pour indiquer un DRB de RN pour lequel la protection d'intégrité a besoin d'être activée ;
un module d'exécution (1020, 1130, 1230), qui est utilisé pour exécuter une protection d'intégrité pour des données qui sont transmises selon les informations de protection d'intégrité envoyées par ledit module d'envoi (1010, 1120, 1220) ;
un module de réception (1110) qui est utilisé pour recevoir à partir d'une MME desservant ledit RN un message de requête de configuration de contexte initial transportant des informations de cause pour établir un E-RAB ou un message de requête de configuration d'E-RAB transportant les informations de cause pour établir l'E-RAB, les informations de cause devant être utilisées par le module d'envoi (1120), et les informations de cause pour établir l'E-RAB comprenant trois valeurs : des données, S1-AP et X2-AP, ou comprenant deux valeurs : des données et une signalisation.

12. - Station de base selon la revendication 11, comprenant en outre :
un module d'obtention (1210), qui est utilisé pour recevoir un paramètre de QoS devant être utilisé par ledit module d'envoi (1220) à partir de la MME desservant ledit RN, ledit paramètre étant utilisé pour transmettre des messages de S1-AP et des messages de X2-AP.

13. - Système pour réaliser une protection d'intégrité, **caractérisé en ce que** le système comprend :
une station de base (1310), qui est utilisée pour envoyer un message transportant des informations de protection d'intégrité à un RN, et exécuter une protection d'intégrité pour des données qui sont transmises selon lesdites informations de protection d'intégrité, lesdites informations de protection d'intégrité étant utilisées pour indiquer un DRB de RN pour lequel la protection d'intégrité a besoin d'être activée ;
le RN (1320), qui est utilisé pour recevoir le message transportant les informations de protection d'intégrité à partir de la station de base, et exécuter une protection d'intégrité pour des données qui sont transmises selon lesdites informations de protection d'intégrité,
dans lequel, avant que ladite station de base n'envoie le message transportant les informations de protection d'intégrité au RN, ladite station de base reçoit à partir d'une MME desservant ledit RN un message de requête de configuration de contexte initial transport des informations de cause pour établir un E-RAB ou un message de requête de configuration d'E-RAB transportant les informations de cause pour établir l'E-RAB, les informations de cause pour établir l'E-RAB comprenant trois valeurs : des données, S1-AP et X2-AP, ou comprenant deux valeurs : des données et une signalisation.
